# EUROPEAN PATENT SPECIFICATION

(11) **EP 3 922 672 B1**
(45) Date of publication and mention of the grant of the patent: **05.03.2025**
(21) Application number: 20752062.8
(22) Date of filing: 31.01.2020
(51) Int. Cl.: C08L 23/08, B29C 64/118, B33Y 70/00

(54) **RESIN COMPOSITION AND RESIN PRODUCT**
HARZZUSAMMENSETZUNG UND HARZPRODUKT
COMPOSITION ET PRODUIT DE RÉSINE

(30) Priority: 05.02.2019 JP 2019019030
(43) Date of publication of application: 15.12.2021
(73) Proprietor: BRIDGESTONE CORPORATION, Chuo-ku Tokyo 104-8340 (JP)
(72) Inventor: AKUTAGAWA Keizo, Tokyo 104-8340 (JP); Nakamura Masaaki, Tokyo 104-8340 (JP); Kotani Kyohei, Tokyo 104-8340 (JP); TAKANO Shigenaga, Tokyo 104-8340 (JP); INUTSUKA Shoko, Tokyo 104-8340 (JP); Ishigami Jyunichi, Tokyo 104-8340 (JP)
(74) Representative: Marks & Clerk LLP
(86) International application number: PCT/JP2020/003752
(87) International publication number: WO 2020/162366

(56) References cited:
- EP-A1- 3 067 389
- EP-A1- 3 351 594
- EP-A1- 3 363 824
- EP-A1- 3 970 989
- EP-A1- 3 978 268
- WO-A1-2017/065299
- WO-A1-2018/003379
- WO-A1-2018/037851
- JP-A- 2011 190 287
- JP-A- H1 135 810
- YASUNORI SAKIHATA, HANSAKA, MASANORI, YOSHIKAWA, TAKAO, MIFUNE, NAOTO,: "Study of recycle and thermal aging properties of styrene type thermoplastic elastomer(I)", JOURNAL OF MATERIALS LIFE SOCIETY, vol. 13, no. 3, 2001, pages 133 - 140, XP055729479

## Description

### TECHNICAL FIELD

The present invention relates to a resin composition and a resin product.

### BACKGROUND ART

3D printers are generally used for modeling of 3D objects these days. Known examples of printing processes in 3D printers include: Fused Deposition Modeling (which will occasionally be abbreviated to "FDM" process hereinafter); material jetting; stereolithography; powder sintering; sheet lamination; and the like. Among these examples, FDM is a process of manufacturing a 3D object by heating/fusing a resin filament and then extruding and depositing the filament, i.e. a simple process not involving reactions between raw materials, thereby being widely used. Examples of conventional raw materials for use in a 3D printer include acrylonitrile-butadiene-styrene based resin (ABS), polylactic acid resin (PLA), and the like.

PTL 1, on the other hand, discloses a multi-component polymer containing a conjugated diene unit, a non-conjugated olefin unit and an aromatic vinyl unit, as a material for improving crack growth resistance and durability of a rubber product. However, PTL 1 only mentions application of the multi-component polymer to a rubber product such as a tire and fails to study any application of the multi-component polymer to a material for a 3D printer.

### CITATION LIST

### Patent Literature

PTL 1: WO2017/065299

### SUMMARY

Fracture characteristics are some of the important performances to be considered in a molded object manufactured by a 3D printer. Examples of conventional raw materials for use in a 3D printer include acrylonitrile-butadiene-styrene based resin (ABS) and polylactic acid resin (PLA), as described above. However, polylactic acid resin, for example, has a defect that it is hard and brittle. A raw material having better fracture characteristics than those conventional raw materials is therefore in demand. Further, moldability is also an important performance to be considered in respect of a raw material for a 3D printer. When a filament is prepared from a raw material by extrusion, for example, failing to ensuring satisfactory fluidity of the raw material during the extrusion causes the filament to move in a pulsating manner, which results in corrugated surfaces of the filament. In this case, adhesiveness of the material extruded from a nozzle deteriorates when the filament is fused and deposited by a 3D printer, which makes it difficult to obtain an object having a desired configuration.

In view of this, an object of the present disclosure is to provide a resin composition having satisfactory moldability and satisfactory fracture characteristics in a compatible manner and thus suitable for a raw material for use in a 3D printer. Further, another object of the present disclosure is to provide a resin product using the resin composition and being excellent in fracture characteristics.

Primary features of the present disclosure for solving the aforementioned problems are as follows.

A resin composition of the present disclosure comprises: a copolymer (A) containing a non-conjugated olefin unit, a conjugated diene unit, and an aromatic vinyl unit; and a thermoplastic resin (B) and/or a thermoplastic elastomer (C), wherein the copolymer (A) has a melting point of 55 °C or higher, a main chain of the copolymer (A) is constituted exclusively of acyclic structures, the total content of the copolymer (A), the thermoplastic resin (B) and the thermoplastic elastomer (C) is ≥ 70 mass % with respect to the total amount of the resin composition, and a content of butylene unit is 0 mol % in the copolymer (A).
The resin composition of the present disclosure has satisfactory moldability and satisfactory fracture characteristics in a compatible manner and thus is suitable for a raw material for use in a 3D printer.

In the resin composition of the present disclosure, the copolymer (A) preferably has the number average molecular weight of 100,000 or more. In this case, hardness of the resin composition in a 0.01 % - 50 % strain area increases and thus hardness of a filament, for example, prepared from the resin composition improves, whereby it is possible to obtain a filament which is easy to wind up and less likely to buckle when it is fed to a nozzle of a 3D printer. It should be noted that the aforementioned superior effect is not particularly relevant to a direct-pellet-fed 3D printer not employing a filament but pellets are directly charged thereto, mixed, fused and extruded from a nozzle thereof.

In a preferable example of the resin composition of the present disclosure, a content of the copolymer (A) is ≤ 90 mass % with respect to the total 100 mass % of the copolymer (A), the thermoplastic resin (B) and the thermoplastic elastomer (C). Moldability of the resin composition further improves in this case.

In the resin composition of the present disclosure, a content of the non-conjugated olefin unit in the copolymer (A) is preferably ≤ 85 mol %. Fracture characteristics of the resin composition further improve in this case.

In another preferable example of the resin composition of the present disclosure, the thermoplastic resin (B) and/or the thermoplastic elastomer (C) is at least one selected from the group consisting of polyethylene, polypropylene-based resin, styrene-based thermoplastic elastomer, polyurethane, acrylonitrile-butadiene-styrene based resin, polylactic acid resin, polyethylene terephthalate, polyamide, and polycarbonate. Moldability and fracture characteristics of the resin composition further improve in this case.

In the resin composition of the present disclosure, a main chain of the copolymer (A) is constituted exclusively of acyclic structures. The resin composition easily fuses and thus has better fused-filament-extrusion property of the resin composition than otherwise, in this case.

A resin product of the present disclosure is characterized in that it uses the resin composition described above. The resin product of the present disclosure has excellent fracture characteristics.

According to the present disclosure, it is possible to provide a resin composition having satisfactory moldability and satisfactory fracture characteristics in a compatible manner and thus suitable for a raw material for use in a 3D printer or additive manufacturing.
Further, according to the present disclosure, it is possible to provide a resin product using the resin composition and being excellent in fracture characteristics.

### DETAILED DESCRIPTION

Hereinafter, a resin composition and a resin product of the present disclosure will be demonstratively described in detail based on embodiments thereof.

### < Resin composition >

A resin composition of the present disclosure has: a copolymer (A) containing a non-conjugated olefin unit, a conjugated diene unit, and an aromatic vinyl unit; and a thermoplastic resin (B) and/or a thermoplastic elastomer (C), wherein the copolymer (A) has a melting point of 55 °C or higher.

The copolymer (A), containing an aromatic vinyl unit as a monomer unit, can thereby contribute to enhancing fracture strength of the resin composition. However, it turned out, as a result of a keen study by the inventors of the present disclosure, that it is difficult to ensure satisfactory fracture elongation of the resin composition only by the copolymer (A). The inventors of the present disclosure then revealed as a result of a further study that it is possible to improve both fracture strength and fracture elongation of the resin composition and thus comprehensively improve fracture characteristics of the resin composition by employing the copolymer (A), the thermoplastic resin (B) and/or the thermoplastic elastomer (C) in combination.
Further, use of only the copolymer (A) in preparation a filament for use in a 3D printer from the resin composition results in corrugated surfaces of the filament thus prepared (in other words, significantly large irregularities at the surfaces of the filament), thereby causing a problem in terms of moldability, as well. In contrast, it is possible to make surfaces of a resulting filament smooth (in other words, make irregularities at surfaces of the filament small) and thus improve moldability of the filament by employing the copolymer (A), the thermoplastic resin (B) and/or the thermoplastic elastomer (C) in combination. In this regard, use of only the copolymer (A) for the resin composition causes exactly the same problem as described above when the resin composition as a raw material is extruded from a nozzle of a 3D printer, because the material extruded from the nozzle moves in a pulsating manner and thereby has a corrugated surface, which causes moldability and adhesiveness of the material thus extruded to deteriorate and makes it difficult to obtain an object having a desired configuration.
Yet further, even when the resin composition includes the copolymer (A), the thermoplastic resin (B) and/or the thermoplastic elastomer (C) therein, an excessively low melting point of the copolymer (A) makes the resin composition too soft, thereby causing problems in that: a filament for use in a 3D printer, prepared from the resin composition, is too soft to be would up properly; the filament tends to buckle when it is fed to a nozzle of a 3D printer; and the like.
In contrast, the resin composition of the present disclosure employs the copolymer (A) having a melting point of 55 °C or higher, whereby it is possible to ensure satisfactory hardness of the resin composition and obtain a filament from the resin composition, which filament is easy to wind up and less likely to buckle. That is, in a case where a filament is prepared from the resin composition of the present disclosure, the resin composition contributes to excellent handling properties of the filament thus prepared. As described above, the resin composition of the present disclosure has satisfactory moldability and satisfactory fracture characteristics in a compatible manner and thus is suitable for a raw material for use in a 3D printer. This advantageous effect, however, is not particularly relevant to a direct-pellet-fed 3D printer not employing a filament or FDM.

The resin composition of the present disclosure includes a copolymer (A) containing a non-conjugated olefin unit, a conjugated diene unit, and an aromatic vinyl unit therein. The copolymer (A) contains at least a non-conjugated olefin unit, a conjugated diene unit, and an aromatic vinyl unit and may either be exclusively constituted of a non-conjugated olefin unit, a conjugated diene unit, and an aromatic vinyl unit or further contain other monomer units.

The non-conjugated olefin unit is a structural unit derived from a non-conjugated olefin compound as a monomer. The non-conjugated olefin unit dissipates energy when it is significantly deformed because a crystalline component derived from the non-conjugated olefin unit collapses due to the deformation. In the present disclosure, a "non-conjugated olefin compound" represents a compound as an aliphatic unsaturated hydrocarbon having at least one carbon-carbon double bond, wherein none of the carbon-carbon double bond(s) are conjugated. The number of carbon atoms of the non-conjugated olefin compound is preferably in the range of 2 to 10. Specific examples of the non-conjugated olefin compound include: α-olefin such as ethylene, propylene, 1-butene, 1-pentene, 1-hexene, 1-heptene, 1-octene; a hetero atom substituted alkene compound such as vinyl pivalate, 1-phenylthioethene, N-vinylpyrrolidone; and the like. Either a single type or combination of two or more types of these examples may be used as the non-conjugated olefin compound. The non-conjugated olefin compound as a monomer of the copolymer (A) is preferably an acyclic non-conjugated olefin compound in terms of improving the fused filament extrusion property of the resin composition including the copolymer (A) therein. The acyclic non-conjugated olefin compound is preferably α-olefin, more preferably α-olefin including ethylene, and particularly preferably constituted of only ethylene. In other words, the non-conjugated olefin unit in the copolymer (A) is preferably an acyclic non-conjugated olefin unit, and the acyclic non-conjugated olefin unit is preferably an α-olefin unit, more preferably an α-olefin unit including an ethylene unit, and particularly preferably constituted of only ethylene units.

A content of the non-conjugated olefin unit in the copolymer (A) is preferably ≤ 85 mol %, more preferably ≤ 80 mol %, still more preferably ≤ 75 mol %, and preferably > 44 mol %, more preferably ≥ 45 mol %, still more preferably ≥ 55 mol %, and particularly preferably ≥ 65 mol %. When a content of the non-conjugated olefin unit is ≤ 85 mol % with respect to the total amount of the copolymer (A), a content of the conjugated diene unit or a content of the aromatic vinyl unit increases accordingly, whereby fracture characteristics (fracture elongation (Eb), fracture strength (Tb), in particular) of the resin composition further improve. When a content of the non-conjugated olefin unit exceeds 44 mol % with respect to the total amount of the copolymer (A), a content of the conjugated diene unit or a content of the aromatic vinyl unit decreases accordingly, whereby weatherproofness of the resin composition improves and/or fracture characteristics at high temperature (fracture strength (Tb), in particular) thereof further improve.

The conjugated diene unit is a structural unit derived from a conjugated diene compound as a monomer. The conjugated diene unit contributes to exhibition/expression of elongation and strength of the resin composition. The conjugated diene compound represents a diene compound having a conjugated system. The number of carbon atoms of the conjugated diene compound is preferably in the range of 4 to 8. Specific examples of the conjugated diene compound include 1,3-butadiene, isoprene, 1,3-pentadiene, 2,3-dimethyl-1,3-butadiene, and the like. Either a single type or combination of two or more types of these examples may be used as the conjugated diene compound. The conjugated diene compound as a monomer of the copolymer (A) preferably includes 1,3-butadiene and/or isoprene, more preferably includes only 1,3-butadiene and/or isoprene, and still more preferably includes only 1,3-butadiene. In other words, the conjugated diene unit in the copolymer (A) preferably includes 1,3-butadiene unit and/or isoprene unit, more preferably includes only 1,3-butadiene unit and/or isoprene unit, and still more preferably includes only 1,3-butadiene unit.

A content of the conjugated diene unit in the copolymer (A) is preferably ≥ 10 mol %, more preferably ≥ 15 mol %, and preferably ≤ 40 mol %, and more preferably ≤ 30 mol %. A content of the conjugated diene unit of ≥ 10 mol % with respect to the total amount of the copolymer (A) is preferable because then a resin composition and a resin product being excellent in fracture elongation can be obtained. A content of the conjugated diene unit of ≤ 40 mol % with respect to the total amount of the copolymer (A) achieves excellent weatherproofness of a resin composition and a resin product.

The aromatic vinyl unit is a structural unit derived from an aromatic vinyl compound as a monomer. The aromatic vinyl unit contributes to successfully improving fracture strength of a resin composition including the copolymer (A) therein. An "aromatic vinyl compound" represents an aromatic compound which has been substituted by at least vinyl group and is not classified as a conjugated diene compound in the present disclosure. The aromatic vinyl compound preferably has eight to ten carbon atoms. Examples of the aromatic vinyl compound include styrene, o-methylstyrene, m-methylstyrene, p-methylstyrene, o, p-dimethyl styrene, o-ethylstyrene, m-ethylstyrene, p-ethylstyrene, and the like. Either a single type or combination of two or more types of the examples may be used as the aromatic vinyl compound. The aromatic vinyl compound as a monomer of the copolymer (A) preferably includes styrene and more preferably includes only styrene in terms of further improving weatherproofness and fracture characteristics of a resin composition and a resin product using the copolymer (A) thus obtained. In other words, the aromatic vinyl unit in the copolymer (A) preferably includes a styrene unit and more preferably includes only styrene units.
In the present disclosure, an aromatic ring in an aromatic vinyl unit is not included in a main chain of the copolymer (A) unless the aromatic ring is bonded to the adjacent unit in the main chain.

A content of the aromatic vinyl unit is preferably ≥ 3 mol %, more preferably ≥ 5 mol %, and preferably ≤ 30 mol %, more preferably ≤ 25 mol %, and still more preferably ≤ 20 mol %. A content of the aromatic vinyl unit of ≥ 3 mol % with respect to the total amount of the copolymer (A) further improves fracture characteristics. An effect caused by the conjugated diene unit and the non-conjugated olefin unit is made conspicuous when a content of the aromatic vinyl unit is ≤ 30 mol % with respect to the total amount of the copolymer (A).

The number of monomer types/species of the copolymer (A) is not particularly restricted as long as the copolymer (A) includes a non-conjugated olefin unit, a conjugated diene unit, and an aromatic vinyl unit therein. The copolymer (A) may include therein a (non-essential) structural unit other than a non-conjugated olefin unit, a conjugated diene unit, and an aromatic vinyl unit. However, a content of the non-essential structural unit is preferably ≤ 30 mol %, more preferably ≤ 20 mol %, still more preferably ≤ 10 mol %, and particularly preferably 0 mol % with respect to the total amount of the copolymer (A) (i.e., it is particularly preferable that the copolymer (A) does not include any no-essential structural unit as described above therein) in terms of obtaining the desired effect.
Further, a content of butylene unit is preferably 0 mol % in the copolymer (A).

The copolymer (A) is preferably a copolymer obtained by polymerizing at least: only one type of conjugated diene compound; only one type of non-conjugated olefin compound; and only one type of an aromatic vinyl compound as monomers in terms of further improving fracture characteristics thereof. In other words, the copolymer (A) is preferably a copolymer containing only one type of conjugated diene unit, only one type of non-conjugated olefin unit, and only one type of aromatic vinyl unit. The copolymer (A) is more preferably a terpolymer constituted exclusively of one type of conjugated diene unit, one type of non-conjugated olefin unit, and one type of aromatic vinyl unit and still more preferably a terpolymer constituted exclusively of 1,3-bitadiene unit, ethylene unit, and styrene unit. In the present disclosure, "one type of conjugated diene unit" comprehensively includes different bonding forms of a conjugated diene unit.

The copolymer (A) has a number average molecular weight (Mn) in terms of polystyrene preferably in the range of 100,000 ≤ Mn ≤ 400,000. The number average molecular weight (Mn) of the copolymer (A), of 100,000 or more, enhances hardness of a resulting resin composition and thus hardness of a filament prepared from the resin composition, whereby it is possible to obtain a filament which is easy to wind up and less likely to buckle when it is fed to a nozzle of a 3D printer. When the number average molecular weight (Mn) of the copolymer (A) is 400,000 or less, a resulting resin composition can be easily fused, whereby the fused-filament-extrusion property of the resin composition improves. It should be noted in this regard that the aforementioned advantageous effect is not particularly relevant to a direct-pellet-fed 3D printer not employing a filament or FDM.

The copolymer (A) has a weight average molecular weight (Mw) in terms of polystyrene preferably in the range of 300,000 ≤ Mw ≤ 1,000,000. The weight average molecular weight (Mw) of the copolymer (A), of 300,000 or more, enhances hardness of a resulting resin composition and thus hardness of a filament prepared from the resin composition, whereby it is possible to obtain a filament which is easy to wind up and less likely to buckle when it is fed to a nozzle of a 3D printer. When the weight average molecular weight (Mw) of the copolymer (A) is 1,000,000 or less, a resulting resin composition can be easily fused, whereby the fused-filament-extrusion property of the resin composition improves. It should be noted in this regard that the aforementioned advantageous effect is not particularly relevant to a direct-pellet-fed 3D printer not employing a filament or FDM.

The copolymer (A) has a molecular weight distribution [Mw/Mn (the weight average molecular weight/ the number average molecular weight)] preferably in the range of 1.00 to 4.00, more preferably in the range of 1.50 to 3.50, and still more preferably in the range of 1.80 to 3.00. It is possible to make physical properties of the copolymer (A) satisfactorily uniform by setting the molecular weight distribution of the copolymer to be ≤ 4.00.

A number average molecular weight (Mn), a weight average molecular weight (Mw), and a molecular weight distribution (Mw/Mn) described above are determined, relative to those of polystyrene as a standard reference material, by gel permeation chromatography (GPC).

The copolymer (A) has a melting point measured by differential scanning calorimetry (DSC) which is to be ≥ 55 °C, preferably ≥ 60 °C, more preferably ≥ 70 °C, and preferably ≤ 200 °C, more preferably ≤ 150 °C. A melting point of the copolymer (A), of 55 °C or higher, enhances hardness of a resin composition containing the copolymer (A) and thus hardness of a filament prepared from the resin composition, whereby it is possible to obtain a filament which is easy to wind up and less likely to buckle when it is fed to a nozzle of a 3D printer. When the melting point of the copolymer (A) is 200 °C or lower, a resulting resin composition can be easily fused, whereby the fused-filament-extrusion property of the resin composition improves. It should be noted in this regard that the aforementioned advantageous effect is not particularly relevant to a direct-pellet-fed 3D printer not employing a filament or FDM. In the present disclosure, a "melting point" mentioned above represents a value measured by the method described in Examples.

A main chain of the copolymer (A) is constituted exclusively of acyclic structures. In a case where a main chain of the copolymer (A) is constituted exclusively of acyclic structures, the copolymer (A) is made soft and the resin composition easily fuses, whereby the fused-filament-extrusion property of the resin composition improves. NMR is employed as a primary measurement means for determining whether a main chain of the copolymer (A) has a cyclic structure or not. Specifically, when a peak derived from a cyclic structure existing in a main chain (e.g., any of peaks appearing in a range of 10 ppm to 24 ppm in connection with three-membered, four-membered, and five-membered cyclic structures) is not observed in a copolymer, the result indicates that the main chain of the copolymer is constituted exclusively of acyclic structures.

The copolymer (A) can be manufactured by a polymerization process using a non-conjugated olefin compound, a conjugated diene compound, and an aromatic vinyl compound as monomers and optionally a coupling process, a washing process and other processes. The copolymer (A) may be either modified or non-modified.
In the present disclosure, it is preferable in manufacturing the copolymer (A) to first charge only a non-conjugated olefin compound and an aromatic vinyl compound without adding a conjugated diene compound thereto and allow the two compounds thus charged to be polymerized under the presence of a catalyst, because a conjugated diene compound is generally more reactive than a non-conjugated olefin compound and an aromatic vinyl compound, whereby it will presumably be difficult to cause the non-conjugated olefin compound and/or the aromatic vinyl compound to be satisfactorily polymerized under the presence of the conjugated diene compound.

Any polymerization method such as solution polymerization, suspension polymerization, liquid-phase bulk polymerization, emulsion polymerization, vapor-phase polymerization, or solid-phase polymerization can be used for the polymerization process. In a case where a solvent is used in a relevant polymerization reaction, any solvent is acceptable as long as the solvent is inactive in the polymerization reaction. Examples of the solvent include toluene, cyclohexane, n-hexane, and the like.

The polymerization process may be carried out by either a single step or multiple (i.e., two or more) steps. The polymerization process carried out by a single step represents a process of effecting polymerization by bringing all monomers to be polymerized (i.e., a conjugated diene compound, a non-conjugated olefin compound, an aromatic vinyl compound and other monomer(s), preferably a conjugated diene compound, a non-conjugated olefin compound, and an aromatic vinyl compound) to simultaneous reactions. The polymerization process carried out by multiple steps includes: a process of forming a polymer by first bringing a portion/all of one/two or more monomer(s) to polymerization reactions (the first polymerization step); and at least one process of then adding the remaining portion(s) of the first polymerization step monomer(s) and the remaining type/species of monomer(s) which have not been used in the first polymerization step, to the polymer formed in the first polymerization step, to complete polymerization (the second polymerization step to the final polymerization step). It is preferable that the polymerization process is carried out by multiple steps in manufacturing a copolymer, in particular.

In the polymerization process, the relevant polymerization reactions are preferably carried out in an atmosphere of inert gas, desirably in an atmosphere of nitrogen gas or argon gas. The temperature in the polymerization reactions, although it is not particularly restricted, is preferably in the range of -100 °C to 200 °C and may be around the room temperature, for example. Pressure during the polymerization reactions is preferably in the range of 0.1 MPa to 10.0 MPa in terms of capturing a sufficient amount of a conjugated diene compound into the polymerization reaction system. Reaction time spared for the polymerization reactions is preferably in the range of 1 second to 10 days, for example, although it is not particularly restricted. The reaction time may be appropriately set depending on conditions such as type of the catalyst, polymerization temperature, and the like.
The polymerization reaction can be stopped by using a polymerization terminator such as methanol, ethanol, isopropanol in the aforementioned polymerization process of the conjugated diene compound.

The aforementioned polymerization process is carried out preferably by multiple steps and more preferably by: a first step of mixing a first monomer raw material including at least an aromatic vinyl compound with a polymerization catalyst, to obtain a polymerization mixture; and a second step of introducing a second monomer raw material including at least one selected from the group consisting of a conjugated diene compound, a non-conjugated olefin compound, and an aromatic vinyl compound, to the polymerization mixture. It is still more preferable that the first monomer raw material does not include a conjugated diene compound but the second monomer raw material includes a conjugated diene compound.

The first monomer raw material for use in the first step may include a non-conjugated olefin compound, as well as an aromatic vinyl compound. Further, the first monomer raw material may contain either the entirety or a portion of the aromatic vinyl compound for use. It should be noted that a non-conjugated olefin compound is to be included in at least one of the first monomer raw material and the second monomer raw material.

The first step described above is preferably carried out in an atmosphere of inert gas, desirably in an atmosphere of nitrogen gas or argon gas. The temperature (the reaction temperature) in the first step, although it is not particularly restricted, is preferably in the range of -100 °C to 200 °C and may be around the room temperature, for example. Pressure during the first step, although it is not particularly restricted, is preferably in the range of 0.1 MPa to 10.0 MPa in terms of capturing a sufficient amount of an aromatic vinyl compound into the polymerization reaction system. Time (reaction time) spared for the first step is preferably in the range of 5 minutes to 500 minutes when the rection temperature is set to be within the range of 25 °C to 80 °C , for example, although the reaction time may be appropriately set depending on conditions such as type of the catalyst, reaction temperature, and the like.

Any polymerization method such as solution polymerization, suspension polymerization, liquid-phase bulk polymerization, emulsion polymerization, vapor-phase polymerization, or solid-phase polymerization can be used for a polymerization method for obtaining the polymerization mixture in the first step. In a case where a solvent is used in a relevant polymerization reaction, any solvent is acceptable as long as the solvent is inactive in the polymerization reaction. Examples of the solvent include toluene, cyclohexane, n-hexane, and the like.

The second monomer raw material for use in the second step preferably includes i) only a conjugated diene compound or ii) a conjugated diene compound and a non-conjugated olefin compound or iii) a conjugated diene compound and an aromatic vinyl compound or iv) a conjugated diene compound, a non-conjugated olefin compound, and an aromatic vinyl compound.
In a case where the second monomer raw material includes, other than a conjugated diene compound, at least one selected from the group consisting of a non-conjugated olefin compound and an aromatic vinyl compound, those monomer raw materials may be introduced into the polymerization mixture after mixing the monomer raw materials and a solvent with each other or, alternatively, the respective monomer raw materials may be introduced separately, one by one, into the polymerization mixture. The respective monomer raw materials may be added either all together or one by one with a time lag therebetween. A method for introducing the second monomer raw material into the polymerization mixture in the second step is not particularly restricted but it is preferable to continuously add the second monomer raw material to the polymerization mixture with controlling or metering flow rates of the respective monomer raw materials thereof. In this regard, in a case where a monomer raw material which is in a gaseous state under the conditions of the polymerization reaction system (for example, ethylene or the like as a non-conjugated olefin compound which is in a gaseous state at the room temperature and at the standard atmospheric pressure) is used, the monomer raw material can be introduced into the polymerization reaction system at a prescribed pressure.

In the second step described above, the polymerization process is preferably carried out in a reaction vessel in an atmosphere of inert gas, desirably in an atmosphere of nitrogen gas or argon gas. The temperature (the reaction temperature) in the second step, although it is not particularly restricted, is preferably in the range of -100 °C to 200 °C and may be around the room temperature, for example. Too high reaction temperature may adversely affect selectivity of cis-1,4 bond of the conjugated diene unit in a reaction. Pressure in the second step, although it is not particularly restricted, is preferably in the range of 0.1 MPa to 10.0 MPa in terms of capturing a sufficient amount of monomers of a conjugated diene compound and the like into the polymerization reaction system. Time (reaction time) spared for the second step is preferably in the range of 0.1 hour to 10 days, for example. The reaction time may be appropriately set depending on conditions such as type of the polymerization catalyst, reaction temperature, and the like.
The polymerization reaction can be stopped by using a polymerization terminator such as methanol, ethanol, isopropanol in the second step.

In the present disclosure, the polymerization process of a non-conjugated olefin compound, a conjugated diene compound, and an aromatic vinyl compound described above preferably includes a process of polymerizing the respective monomers under the presence of at least one of the following components (a)-(f) as catalyst components. Use of at least one of the following (a)-(f) components as a catalyst component is preferable and use of at least two of the following (a)-(f) components in combination as a catalyst composition is more preferable in the polymerization process.
Component (a): a rare earth element compound or a reactant resulted from a reaction between the rare earth element compound and a Lewis base
Component (b): an organic metal compound
Component (c): aluminoxane
Component (d): an ionic compound
Component (e): a halogen compound
Component (f): a compound having a cyclopentadienyl, an indenyl or a fluorenyl group The components (a)-(f) are described in detail in WO2017/065299, WO2018/092733 and the like.

The coupling process is a process of carrying out a reaction (a coupling reaction) for modifying at least a portion, e.g., a terminal end, of a polymer chain of the copolymer obtained by the polymerization process described above.
In the coupling process, the coupling reaction is preferably carried out when a conversion ratio in the polymerization reaction has reached 100 %.
Type of a coupling agent for use in the coupling reaction is not particularly restricted and can be appropriately selected according to the purpose. Examples of the coupling agent include: (i) a tin-containing compound such as bis(maleic acid-1-octadecyl)dioctyl tin (IV); (ii) an isocyanate compound such as 4,4'-diphenylmethane diisocyanate; (iii) an alkoxysilane compound such as glycidyl propyltrimethoxysilane; and the like. Either a single type or combination of two or more types of these examples may be used as the coupling agent.
Bis(maleic acid-1-octadecyl)dioctyl tin (IV) is preferable as the coupling agent among these examples in terms of high reaction efficiency and relatively little gel generation. It is possible to increase the number average molecular weight (Mn) of a copolymer by carrying out the coupling reaction.

Rinsing process is a process of rinsing a copolymer obtained by the polymerization process described above. Type of a solvent for use in the rinsing process is not particularly restricted and can be appropriately selected according to the purpose. Examples of the solvent include methanol, ethanol, isopropanol, and the like. An acid (such as hydrochloric acid, sulfuric acid, nitric acid) may be added, for use, to such a solvent as described above in the rinsing process when a Lewis acid-derived catalyst is used as a polymerization catalyst, in particular. An amount to be added, of the acid, is preferably 15 mol % or less with respect to the solvent. Addition of the acid by an amount exceeding 15 mol % with respect to the solvent may cause the acid to remain in the copolymer, possibly adversely affecting a mixing and kneading process and a vulcanization reaction.
An amount of catalyst residue in the copolymer can be reduced to an appropriate level by the rinsing process.

The resin composition of the present disclosure includes the thermoplastic resin (B) and/or the thermoplastic elastomer (C) therein. That is, the resin composition of the present disclosure includes at least one of the thermoplastic resin (B) and the thermoplastic elastomer (C) therein.
In the present disclosure, the thermoplastic resin (B) and the thermoplastic elastomer (C) respectively represent polymer compounds of which materials soften, exhibit fluidity as temperature increases and become relatively hard and have strength when they are cooled. In the present disclosure, of such polymer compounds as described above, a polymer compound of which material softens, exhibits fluidity as temperature increases and becomes relatively hard and has strength when it is cooled, with retaining rubberlike elasticity, will be referred to as "thermoplastic elastomer (C)" and a polymer compound of which material softens, exhibits fluidity as temperature increases and becomes relatively hard and has strength when it is cooled, without exhibiting rubberlike elasticity, will be referred to as "thermoplastic resin (B)" for distinction.
Further, in the present disclosure, the thermoplastic resin (B) and the thermoplastic elastomer (C) do not subsume a copolymer corresponding to "the copolymer (A) containing a non-conjugated olefin unit, a conjugated diene unit, and an aromatic vinyl unit" described above.

Examples of the thermoplastic resin (B) include polyolefin-based resins such as polyethylene (PE), a polypropylene (PP)-based resin, and the like. Type of the polyethylene is not particularly restricted and examples thereof include high density polyethylene (HDPE), low density polyethylene (LDPE), and the like. The polypropylene-based resin subsumes, as well as propylene homopolymer, a random copolymer and a block copolymer containing ethylene in addition to propylene. Other examples of the thermoplastic resin (B) include polyurethane, acrylonitrile-butadiene-styrene based resin (ABS resin), polylactic acid resin (PLA resin), polyethylene terephthalate (PET), polybutylene terephthalate (PBT), polyamide (PA), polycarbonate (PC), acrylic resin, polyvinyl chloride (PVC), polystyrene (PS), polyvinyl acetate (PVAc), and the like. The thermoplastic resin (B) may be synthesized by the conventionally known method for use or, alternatively, a commercially available product may be used as the thermoplastic resin (B).

Examples of the thermoplastic elastomer (C) include styrenic thermoplastic elastomers (TPS), olefinic thermoplastic elastomer (TPO), thermoplastic polyamide elastomer (TPA), thermoplastic polyurethane elastomer (TPU), thermoplastic copolyester elastomer (TPC), thermoplastic vulcanizate (TPV), and the like. Among these examples, styrenic thermoplastic elastomer (TPS) is preferable in terms of moldability and fracture characteristics of a resulting resin composition. The thermoplastic elastomer (C) may be synthesized by the conventionally known method for use or, alternatively, a commercially available product may be used as the thermoplastic elastomer (C).

Each styrenic thermoplastic elastomer (TPS) has an aromatic vinyl-based polymer block (a hard segment) and a rubber block (a soft segment). The aromatic vinyl-based polymer block portion forms physical crosslinking and thus functions as a crosslinking point. On the other hand, the rubber block imparts a resulting copolymer compound with rubber elasticity. Styrenic thermoplastic elastomers are classified by the arrangement forms of soft segments in molecules thereof and examples thereof include styrene-butadiene-styrene block copolymer (SBS), styrene-isoprene-styrene block copolymer (SIS), styrene-isobutylene-styrene block copolymer (SIBS), styrene-ethylene/butylene-styrene block copolymer (SEBS), styrene-ethylene/propylene-styrene block copolymer (SEPS), styrene-ethylene-ethylene/propylene-styrene block copolymer (SEEPS), and the like. Examples of the styrenic thermoplastic elastomers further include: a block copolymer of crystalline polyethylene and an ethylene-butylene-styrene random copolymer, obtained by hydrogenating a block copolymer of polybutadiene and a butadiene-styrene random copolymer; a diblock copolymer of, e.g., crystalline polyethylene and polystyrene, obtained by hydrogenating a block copolymer of polystyrene and polybutadiene or an ethylene-butadiene random copolymer; and the like. Among the examples, styrene-ethylene/butylene-styrene block copolymer (SEBS) is preferable in terms of moldability and fracture characteristics of a resulting resin composition.

Among the materials described above, polyethylene, polypropylene-based resin, styrenic thermoplastic elastomer, polyurethane, acrylonitrile-butadiene-styrene based resin, polylactic acid resin, polyethylene terephthalate, polyamide, and polycarbonate are preferable as the thermoplastic resin (B) and the thermoplastic elastomer (C) in terms of moldability and fracture characteristics of a resulting resin composition.
Either a single type or combination of two or more types of the aforementioned examples may be used as the thermoplastic resin (B) and the thermoplastic elastomer (C).

In the resin composition of the present disclosure, a content of the copolymer (A) is preferably ≤ 90 mass %, more preferably ≤ 80 mass %, and preferably ≥ 30 mass %, more preferably ≥ 40 mass %, with respect to the total 100 mass % of the copolymer (A), the thermoplastic resin (B) and the thermoplastic elastomer (C). In a case where a content of the copolymer (A) is ≤ 90 mass % with respect to the total 100 mass % of the copolymer (A), the thermoplastic resin (B) and the thermoplastic elastomer (C), moldability of the resin composition further improves. In a case where a content of the copolymer (A) is ≥ 30 mass % with respect to the total 100 mass % of the copolymer (A), the thermoplastic resin (B) and the thermoplastic elastomer (C), fracture characteristics of the resin composition further improve.

In the resin composition of the present disclosure, the total content of the thermoplastic resin (B) and the thermoplastic elastomer (C) is preferably ≥ 10 mass % and preferably ≤ 70 mass % with respect to the total 100 mass % of the copolymer (A), the thermoplastic resin (B) and the thermoplastic elastomer (C). In a case where the total content of the thermoplastic resin (B) and the thermoplastic elastomer (C) is ≥ 10 mass with respect to the total 100 mass % of the copolymer (A), the thermoplastic resin (B) and the thermoplastic elastomer (C), moldability of the resin composition further improves. In a case where the total content of the thermoplastic resin (B) and the thermoplastic elastomer (C) is ≤ 70 mass with respect to the total 100 mass % of the copolymer (A), the thermoplastic resin (B) and the thermoplastic elastomer (C), fracture characteristics of the resin composition further improve.

The resin composition of the present disclosure may include an additive in addition to the copolymer (A), the thermoplastic resin (B) and the thermoplastic elastomer (C). In the resin composition of the present disclosure, the total content of the copolymer (A), the thermoplastic resin (B) and the thermoplastic elastomer (C) is ≥ 70 mass %, preferably ≥ 80 mass %, more preferably ≥ 90 mass %, and may be 100 mass % with respect to the total amount of the resin composition. In a case where the total content of the copolymer (A), the thermoplastic resin (B) and the thermoplastic elastomer (C) is ≥ 70 mass with respect to the total amount of the resin composition, both satisfactory moldability and satisfactory fracture characteristics of the resin composition can be achieved in a more highly compatible manner than otherwise.

Type of the aforementioned additive is not particularly restricted and examples thereof include an antistatic agent, a lubricant, a nucleating agent, a tackifier, an antifogging agent, a mold release agent, a plasticizer, a filler, an antioxidant, a pigment, a dye, a flavoring agent, a fire retardant, and the like. The total content of the additive(s) is preferably ≤ 30 mass %, more preferably ≤ 20 mass %, still more preferably ≤ 10 mass %, and may be 0 mass % with respect to the total amount of the resin composition. In a case where the total content of the additive(s) is ≤ 30 mass with respect to the total amount of the resin composition, both satisfactory moldability and satisfactory fracture characteristics of the resin composition can be achieved in a more highly compatible manner than otherwise.

Type of a method for manufacturing the resin composition of the present disclosure is not particularly restricted and examples thereof include fusing, mixing, and kneading the copolymer (A), the thermoplastic resin (B) and/or the thermoplastic elastomer (C), and optionally an additive selected as desired, to obtain a resin composition. The resin composition thus manufactured may be extruded to have a filament-like configuration for use in a 3D printer and then taken up on a bobbin-like structure as a roll, for example, according to necessity.

### < Resin product >

A resin product of the present disclosure characteristically uses the resin composition of the present disclosure described above. The resin product of the present disclosure is excellent in fracture characteristics because it uses the resin composition of the present disclosure.

Applications of the resin product of the present disclosure are not particularly restricted and the resin product is applicable to various articles each of which has a resin portion in at least a part thereof. Examples of the articles include a vehicle component, an electronic component, and the like.

The resin product of the present disclosure can be manufactured by: preparing a filament from the aforementioned resin composition of the present disclosure; and fusing, extruding, and depositing the filament by a FDM 3D printer. A FDM 3D printer generally has a mechanism in which a filament is fed to a nozzle as a breakthrough by a roller. The filament is therefore required to have rigidity equal to or higher than a certain value in order to avoid buckling. In this regard, a filament prepared from the resin composition described above, of the present disclosure, has satisfactorily high rigidity, whereby the filament can avoid buckling when it is fed to a nozzle by a roller. This superior effect is not particularly relevant to a direct-pellet-fed 3D printer not employing a filament.

A method for manufacturing a resin product of the present disclosure is not restricted to the method using a filament described above. For example, a resin product of the present disclosure can also be manufactured by preparing a ribbon from the resin composition and fusing, extruding and deposing the ribbon.

A resin product of the present disclosure may have a composition which is either uniform or non-uniform. For example, it is possible to manufacture a filament of which hardness varies seamlessly by supplying the resin composition with changing the composition thereof. In this regard, it is possible to manufacture a resin product of which parts have different compositions, respectively, by supplying such a filament as described above of which hardness varies seamlessly to a nozzle of a 3D printer and fusing, extruding and depositing the filament. The resulting resin product is particularly useful, for example, when the performances required of the parts thereof differ, respectively.

### EXAMPLES

The present disclosure will be described further in detail by Examples hereinafter. The present disclosure is not restricted by any means by these Examples.

### < Method for analyzing copolymers >

The number average molecular weight (Mn), the weight average molecular weight (Mw), the molecular weight distribution (Mw/Mn), respective contents of ethylene unit, butadiene unit and styrene unit, and a melting point (Tm) were measured and the structure of a main chain was confirmed by the following methods, respectively, for each of the copolymers synthesized as described below. The results are shown in Table 1.

### (1) Number average molecular weight (Mn), weight average molecular weight (Mw), and molecular weight distribution (Mw/Mn)

The number average molecular weight (Mn), the weight average molecular weight (Mw), and the molecular weight distribution (Mw/Mn) in terms of polystyrene standard were determined, respectively, for each of the copolymers, relative to monodisperse polystyrene as a standard reference material, by using gel permeation chromatography [GPC: HLC-8121GPC/HT manufactured by Tosoh Corporation, Column: GMH_{HR}-H(S)HT × 2 manufactured by Tosoh Corporation, Detector: a differential refractive index detector (RI)]. The measurement temperature was 40 °C.

### (2) Contents of ethylene unit, butadiene unit and styrene unit

Contents (mol %) of ethylene unit, butadiene unit and styrene unit in each of the copolymers were determined from integration ratios of respective peaks in ¹H-NMR spectrum (100 °C, d-tetrachloroethane reference: 6 ppm).

### (3) Melting point (Tm)

Melting point (Tₘ) of each of the copolymers was measured according to JIS K 7121-1987 by using a differential scanning calorimeter (DSC) "DSCQ2000" manufactured by TA Instruments Japan.

### (4) Confirmation of structure of main chain

¹³C-NMR spectrum was measured for each of the copolymers thus synthesized. It was confirmed that each of the copolymers had a main chain constituted exclusively of acyclic structures because no peak was observed in the range of 10 ppm to 24 ppm in the¹³C-NMR spectrum chart thereof.

### < Method for synthesizing Copolymer 1 >

Copolymer 1 was synthesized by: charging 100 g of styrene and 379 g of toluene into a thoroughly dry 2000 mL pressure-resistant stainless reactor;
charging, on the other hand, 0.090 mmol of mono(1,3-bis(tertbutyldimethylsilyl)indenyl) gadolinium bis(bis(dimethylsilyl)amide) complex {1,3-(t-BuMe₂Si)₂C₉H₅Gd[N(SiHMe₂)₂]₂}, 0.090 mmol of N,N-dimethylanilinium tetrakis(pentafluorophenyl)borate [Me₂NHPhB(C₆F₅)₄], and 0.90 mmol of triisobutylaluminum into a glass vessel in a glovebox under nitrogen atmosphere and adding 57 mL of toluene thereto;
leaving the mixture for 16 hours for aging, to obtain a catalyst solution;
adding the catalyst solution thus obtained, to the pressure-resistant stainless reactor, and heating the mixture in the reactor to 60 °C;
then adding ethylene to the pressure-resistant stainless reactor at pressure of the ethylene: 1.5 MPa and carrying out copolymerization at 75 °C for 4 hours in total by also continuously charging 280 g of a toluene solution containing 70 g of 1,3-butadiene to the reactor at a flow rate of 1.5 to 2.0 mL/minute;
stopping the copolymerization reaction by adding an isopropanol solution (1 mL) of 5 mass % 2,2'-methylene-bis(4-ethyl-6-t-butylphenol) (NS-5) to the pressure-resistant stainless reactor; and
isolating a copolymer by using a large amount of methanol and vacuum-drying the resulting copolymer at 50 °C, thereby obtaining Copolymer 1.

### < Method for synthesizing Copolymer 2 >

Copolymer 2 is synthesized by: charging 35 g of styrene and 643 g of toluene into a thoroughly dry 2000 mL pressure-resistant stainless reactor;
charging, on the other hand, 0.075 mmol of mono((1-benzyldimethylsilyl-3-methyl)indenyl)bis(bis(dimethylsilyl)amide) gadolinium complex {(1-BnMe₂Si-3-Me)C₉H₅Gd[N(SiHMe₂)₂]₂}, and 0.075 mmol of trityl tetrakis(pentafluorophenyl)borate [Ph₃CB(C₆F₅)₄] into a glass vessel in a glovebox under nitrogen atmosphere and adding 20 mL of toluene to the mixture, to obtain a catalyst solution;
adding the catalyst solution thus obtained, to the pressure-resistant stainless reactor, and heating the mixture in the reactor to 60 °C;
then adding ethylene to the pressure-resistant stainless reactor at pressure of the ethylene: 1.5 MPa and carrying out copolymerization at 75 °C for 4 hours in total by also continuously charging 72 g of a toluene solution containing 18 g of 1,3-butadiene to the reactor at a flow rate of 0.3 to 0.4 mL/minute;
stopping the copolymerization reaction by adding an isopropanol solution (1 mL) of 5 mass % 2,2'-methylene-bis(4-ethyl-6-t-butylphenol) (NS-5) to the pressure-resistant stainless reactor; and
isolating a copolymer by using a large amount of methanol and vacuum-drying the resulting copolymer at 50 °C, thereby obtaining Copolymer 2.

### < Method for synthesizing Copolymer 3 >

Copolymer 3 was synthesized by: charging 100 g of styrene and 378 g of toluene into a thoroughly dry 2000 mL pressure-resistant stainless reactor;
charging, on the other hand, 0.090 mmol of mono(1,3-bis(tertbutyldimethylsilyl)indenyl) gadolinium bis(bis(dimethylsilyl)amide) complex {1,3-(t-BuMe₂Si)₂C₉H₅Gd[N(SiHMe₂)₂]₂}, 0.090 mmol of N,N-dimethylanilinium tetrakis(pentafluorophenyl)borate [Me₂NHPhB(C₆F₅)₄], and 0.90 mmol of triisobutylaluminum into a glass vessel in a glovebox under nitrogen atmosphere and adding 57 mL of toluene thereto;
leaving the mixture for 16 hours for aging, to obtain a catalyst solution;
adding the catalyst solution thus obtained, to the pressure-resistant stainless reactor, and heating the mixture in the reactor to 60 °C;
then adding ethylene to the pressure-resistant stainless reactor at pressure of the ethylene: 1.5 MPa and carrying out copolymerization at 75 °C for 3 hours in total by also continuously charging 210 g of a toluene solution containing 53 g of 1,3-butadiene to the reactor at a flow rate of 1.5 to 2.0 mL/minute;
stopping the copolymerization reaction by adding an isopropanol solution (1 mL) of 5 mass % 2,2'-methylene-bis(4-ethyl-6-t-butylphenol) (NS-5) to the pressure-resistant stainless reactor; and
isolating a copolymer by using a large amount of methanol and vacuum-drying the resulting copolymer at 50 °C, thereby obtaining Copolymer 3.

**[Table 1]**

| | | Copolymer 1 | Copolymer 2 | Copolymer 3 |
|---|---|---|---|---|
| Number average molecular weight (Mn) | × 10³ | 187 | 85 | 167 |
| Weight average molecular weight (Mw) | × 10³ | 413 | 280 | 396 |
| Molecular weight distribution (Mw/Mn) | - | 2.2 | 3.3 | 2.4 |
| Content of ethylene unit | mol% | 67 | 87 | 70 |
| Content of butadiene unit | mol% | 28 | 8 | 24 |
| Content of styrene unit | mol% | 5 | 5 | 6 |
| Melting point (Tm) | °C | 79 | 50 | 78 |

### < Preparation and evaluation of resin compositions >

### (Examples 1 to 3 and Comparative Examples 1 to 3)

Filament samples for a FDM 3D printer were prepared from the respective copolymers synthesized as described above, a commercially available thermoplastic resin (B) and/or a commercially available thermoplastic elastomer (C) according to the blend formulations shown in Table 2 by using a 5mL micro compounder (extruder) manufactured by Xplore Instruments.

Mixing and kneading was carried out under the conditions of the mixing and kneading temperature: 170 °C, a rotation number of the screw: 100 rpm, mixing and kneading time: 3 minutes. Those conditions were set such that torque during the mixing and kneading process did not exceed the maximum value of 8000 N.

Further, when a filament sample was extruded after the mixing and kneading, extrusion was carried out by using a nozzle (diameter: 1.25 mm) and reducing a rotation number of the screw to 10 rpm so that the filament sample had a diameter in the range of 1.7 mm to 1.8 mm.

The filament sample thus extruded was then wound up by using a fiber winder (an optional device manufactured by Xplore Instruments) at a winding speed of 10 mm/second, so that the filament sample had a constant diameter.

Fracture elongation and fracture strength were measured for each of the filament samples thus obtained, by the methods described below, and moldability thereof was also evaluated. The results are shown in Table 2.

### (5) Method for measuring fracture elongation and fracture strength

Fracture elongation and fracture strength of each of the filament samples were evaluated by measuring a stress-strain curve of the filament sample by using a tensile test device ("Dual Column Table Model 5965 Testing System" manufactured by Instron^{®}) under the following conditions and thus determining i) strain as fracture elongation (%) and ii) fracture stress (MPa), respectively.
Maximum stress applicable to load cells: 5 kN
Displacement to be measured: A distance between the chucks after displacement from the initial length of 10 mm
Chuck configuration and chuck-clamping pressure: Each chuck had a configuration of clamping a sample between two plates at fracture stress of 20 MPa (such that the sample should not slip relative to the chuck when 500 N, which is approximately "50 N as the tensile force at break" × 10, was applied thereto)
Tensile speed: 100 mm/minute
Atmosphere temperature: Room temperature
Fracture elongation was regarded as "satisfactory" when it was equal to or higher than 300 %. Fracture strength was regarded as "satisfactory" when it was equal to or higher than 6 MPa.
As for the resin composition of Comparative Example 3, a yield point was observed therein, whereby tensile yield stress is shown as fracture strength thereof in Table 2.

### (6) Method for evaluating moldability

Moldability of each of the filament samples prepared under the extrusion conditions described above was evaluated according to a surface roughness of the filament sample. In a case where a filament moves in a pulsating manner in the extrusion process thereof, such a movement will result in corrugated surfaces of the filament, which corrugated surfaces deteriorate adhesiveness of the filament and makes it difficult to obtain an object having a desired configuration from the filament. In view of this, a surface roughness of each of the filament samples prepared as described above was employed as an index of moldability in evaluation of moldability thereof.

A surface roughness of the filament sample was determined by: selecting three sites, each having a 10 mm range, at a surface of the filament sample; measuring Rz (µm) at each of the three sites by using a 3D laser scanning microscope ("VK-X1000" manufactured by Keyence Corporation); and calculating the average of the Rz values thus measured. The average values thus obtained are shown as the Rz values of the respective filament samples in Table 2.

Moldability of the filament sample was regarded as "satisfactory" when a surface roughness (Rz) thereof was equal to or smaller than 200 µm.

By evaluating moldability as described above, it is now possible to ensure satisfactory adhesiveness of the material extruded from a nozzle when a filament is fused and deposited by a 3D printer, which makes it possible to obtain an object having a desired configuration in a reliable manner.

### (Comparative Example 4)

Preparation of a filament sample for use in a FDM 3D printer, of Comp. Example 4, is attempted according to the blend formulation shown in Table 2 by using Copolymer 2 and a commercially available polyethylene in otherwise the same manner as Examples 1 to 3 and Comp. Examples 1 to 3.
However, the resin composition of Comp. Example 4 thus extruded from a nozzle is too soft and breaks when it is wound up, thereby making it difficult to prepare a filament therefrom. Accordingly, it is not possoble to measure fracture elongation and fracture strength and evaluate moldability of resin composition of Comparative Example 4.

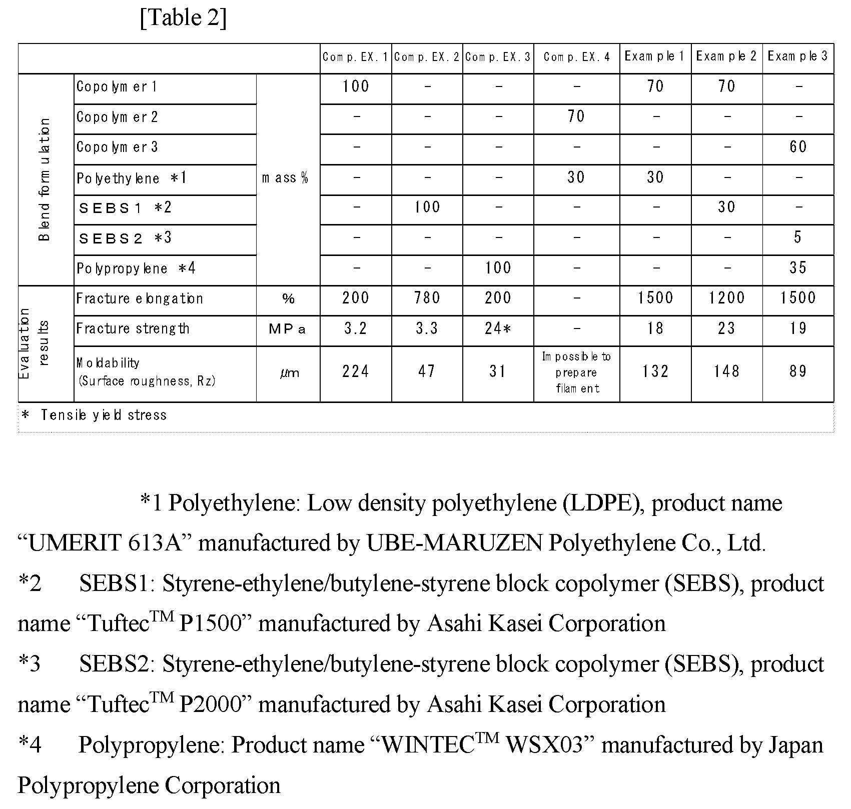

It is understood from Table 2 that a resin composition being excellent in moldability and fracture characteristics can be obtained by blending a copolymer (A) containing a non-conjugated olefin unit, a conjugated diene unit, and an aromatic vinyl unit and having a melting point of 55 °C or higher, with a thermoplastic resin (B) and/or a thermoplastic elastomer (C).

### INDUSTRIAL APPLICABILITY

The resin composition of the present disclosure can be used as a raw material for use in a 3D printer or additive manufacturing.

## Claims

1. A resin composition, comprising:
a copolymer (A) containing a non-conjugated olefin unit, a conjugated diene unit, and an aromatic vinyl unit; and
a thermoplastic resin (B) and/or a thermoplastic elastomer (C),
wherein the copolymer (A) has a melting point of 55 °C or higher, measured by differential scanning calorimetry (DSC),
a main chain of the copolymer (A) is constituted exclusively of acyclic structures,
the total content of the copolymer (A), the thermoplastic resin (B) and the thermoplastic elastomer (C) is ≥ 70 mass % with respect to the total amount of the resin composition, and
a content of butylene unit is 0 mol % in the copolymer (A).

2. The resin composition of claim 1, wherein the copolymer (A) has the number average molecular weight of 100,000 of more, determined by gel permeation chromatography (GPC).

3. The resin composition of claim 1 or 2, wherein a content of the copolymer (A) is ≤ 90 mass % with respect to the total 100 mass % of the copolymer (A), the thermoplastic resin (B) and the thermoplastic elastomer (C).

4. The resin composition of any of claims 1 to 3, wherein a content of the non-conjugated olefin unit in the copolymer (A) is ≤ 85 mol %.

5. The resin composition of any of claims 1 to 4, wherein the thermoplastic resin (B) and/or the thermoplastic elastomer (C) is at least one selected from the group consisting of polyethylene, polypropylene-based resin, styrene-based thermoplastic elastomer, polyurethane, acrylonitrile-butadiene-styrene based resin, polylactic acid resin, polyethylene terephthalate, polyamide, and polycarbonate.

6. The resin composition of claim 1, wherein the resin composition comprises the thermoplastic resin (B) and the thermoplastic elastomer (C), the thermoplastic resin (B) including a polyolefin-based resin.

7. A resin product, using the resin composition of any of claims 1 to 6.

## Patentansprüche

1. Harzzusammensetzung, umfassend:
ein Copolymer (A), das eine nicht-konjugierte Olefineinheit, eine konjugierte Dieneinheit und eine aromatische Vinyleinheit enthält; und
ein thermoplastisches Harz (B) und/oder ein thermoplastisches Elastomer (C),
wobei das Copolymer (A) einen Schmelzpunkt von 55 °C oder höher, gemessen durch dynamische Differenzkalorimetrie (DSC), aufweist,
eine Hauptkette des Copolymers (A) ausschließlich aus acyclischen Strukturen besteht,
der Gesamtgehalt des Copolymers (A), des thermoplastischen Harzes (B) und des thermoplastischen Elastomers (C) ≥ 70 Massen-% in Bezug auf die Gesamtmenge der Harzzusammensetzung beträgt und
ein Gehalt der Butyleneinheit 0 Mol-% in dem Copolymer (A) beträgt.

2. Harzzusammensetzung nach Anspruch 1, wobei das Copolymer (A) ein zahlenmittleres Molekulargewicht von 100 000 oder mehr, bestimmt durch Gelpermeationschromatographie (GPC), aufweist.

3. Harzzusammensetzung nach Anspruch 1 oder 2, wobei der Gehalt des Copolymers (A) ≤ 90 Massen-% beträgt, bezogen auf die Gesamtmenge von 100 Massen-% des Copolymers (A), des thermoplastischen Harzes (B) und des thermoplastischen Elastomers (C).

4. Harzzusammensetzung nach einem der Ansprüche 1 bis 3, wobei der Gehalt der nicht konjugierter Olefineinheit im Copolymer (A) ≤ 85 Mol-% beträgt.

5. Harzzusammensetzung nach einem der Ansprüche 1 bis 4, wobei das thermoplastische Harz (B) und/oder das thermoplastische Elastomer (C) mindestens eines ist, ausgewählt aus der Gruppe, bestehend aus Polyethylen, Harz auf Polypropylen-Basis, thermoplastischem Elastomer auf Styrol-Basis, Polyurethan, Harz auf AcrylnitrilButadien-Styrol-Basis, Polymilchsäureharz, Polyethylenterephthalat, Polyamid und Polycarbonat.

6. Harzzusammensetzung nach Anspruch 1, wobei die Harzzusammensetzung das thermoplastische Harz (B) und das thermoplastische Elastomer (C) umfasst, wobei das thermoplastische Harz (B) ein Harz auf Polyolefin-Basis einschließt.

7. Harzprodukt unter Verwendung der Harzzusammensetzung nach einem der Ansprüche 1 bis 6.

## Revendications

1. Composition de résine, comprenant :
un copolymère (A) contenant une unité d'oléfine non conjuguée, une unité de diène conjugué et une unité de vinyle aromatique ; et
une résine thermoplastique (B) et/ou un élastomère thermoplastique (C),
dans laquelle le copolymère (A) a un point de fusion de 55 °C ou plus, mesuré par calorimétrie différentielle à balayage (DSC),
une chaîne principale du copolymère (A) est constituée exclusivement de structures acryliques,
la teneur totale en copolymère (A), résine thermoplastique (B) et élastomère thermoplastique (C) est ≥ 70 % en masse par rapport à la quantité totale de la composition de résine, et
une teneur en unité de butylène est de 0 % en moles dans le copolymère (A).

2. Composition de résine selon la revendication 1, dans laquelle le copolymère (A) a un poids moléculaire moyen en nombre de 100 000 ou plus, déterminé par chromatographie par perméation sur gel (GPC).

3. Composition de résine selon la revendication 1 ou 2, dans laquelle la teneur en copolymère (A) est ≤ 90 % en masse par rapport au total de 100 % en masse du copolymère (A), de la résine thermoplastique (B) et de l'élastomère thermoplastique (C).

4. Composition de résine selon l'une quelconque des revendications 1 à 3, dans laquelle la teneur en unité d'oléfine non conjuguée dans le copolymère (A) est ≤ 85 % en moles.

5. Composition de résine selon l'une quelconque des revendications 1 à 4, dans laquelle la résine thermoplastique (B) et/ou l'élastomère thermoplastique (C) sont au moins un choisi dans le groupe constitué de : polyéthylène, résine à base de polypropylène, élastomère thermoplastique à base de styrène, polyuréthane, résine à base d'acrylonitrile-butadiène-styrène, résine d'acide polylactique, polyéthylène téréphtalate, polyamide et polycarbonate.

6. Composition de résine selon la revendication 1, où la composition de résine comprend la résine thermoplastique (B) et l'élastomère thermoplastique (C), la résine thermoplastique (B) incluant une résine à base de polyoléfine.

7. Produit de résine, utilisant la composition de résine selon l'une quelconque des revendications 1 à 6.
